(19) Europäisches Patentamt
European Patent Office
Office européen des brevets

(11) Veröffentlichungsnummer: **0 073 737**
**B1**

(12) # EUROPÄISCHE PATENTSCHRIFT

(45) Veröffentlichungstag der Patentschrift: **08.01.86**

(51) Int. Cl.⁴: **C 09 B 67/22**, C 09 B 1/54, D 06 P 1/20

(21) Anmeldenummer: **82810348.1**

(22) Anmeldetag: **23.08.82**

(54) **Farbstoffmischungen aus Anthrachinonfarbstoffen.**

(30) Priorität: **28.08.81 CH 5544/81**

(43) Veröffentlichungstag der Anmeldung: **09.03.83 Patentblatt 83/10**

(45) Bekanntmachung des Hinweises auf die Patenterteilung: **08.01.86 Patentblatt 86/2**

(84) Benannte Vertragsstaaten: **BE CH DE FR GB LI**

(56) Entgegenhaltungen:
**DE - A - 2 531 557**
**FR - A - 2 260 562**
**GB - A - 2 011 484**
**US - A - 2 992 240**

(73) Patentinhaber: **CIBA-GEIGY AG, Klybeckstrasse 141, CH-4002 Basel (CH)**

(72) Erfinder: **Möckli, Peter, Dr., Sandgrubenstrasse 13, CH-4124 Schönenbuch (CH)**

**EP 0 073 737 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der vorliegenden Erfindung sind Farbstoffmischungen, enthaltend drei oder vier Farbstoffe der Formel (1)

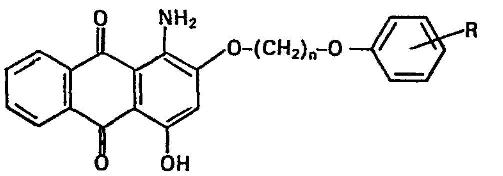

(1)

worin R Wasserstoff, Methyl oder Ethyl und n eine ganze Zahl von 2 bis 4 bedeutet.

Die Farbstoffe der obenstehenden Formel (1), worin n = 2 ist, sind bekannt und finden z.T. Verwendung zum Färben von Polyestermaterial. Diese Farbstoffe weisen jedoch nur einen unbefriedigenden Aufbau auf synthetischem Textilmaterial auf, so dass es nicht gelingt, Färbungen in tiefen Tönen zu erzielen.

Aufgabe der vorliegenden Erfindung war es, diesen Nachteil zu beheben. Dies gelingt überraschenderweise dadurch, dass man Mischungen, enthaltend drei oder vier dieser Farbstoffe, verwendet. Der Aufbau dieser Mischungen ist erheblich besser als bei Verwendung der einzelnen Farbstoffe. Dies hat zur Folge, dass, insbesondere bei tiefen Färbungen, erheblich weniger Farbstoff in der Färbeflotte zurückbleibt.

In der Formel (1) bedeutet n eine ganze Zahl von 2 bis 4, zwischen den beiden Sauerstoffatomen befindet sich also eine Ethylen-, Propylen- oder Butylenbrücke. Vorzugsweise ist n 2 oder 3.

Bevorzugte Mischungen sind solche, enthaltend

(a) Farbstoffe der Formel (1), worin n gleich 2 ist und R Wasserstoff, Methyl oder in o- oder m-Stellung zum Sauerstoff angeordnetes Ethyl bedeutet, und/oder

(b) Farbstoffe der Formel (1), worin n gleich 3 ist und R Wasserstoff oder Methyl oder Ethyl, welche in m- oder p-Stellung zum Sauerstoff angeordnet sind, bedeutet.

Unter diesen sind diejenigen besonders geeignet, welche

(a) Farbstoffe der Formel (1), worin n gleich 2 ist, enthalten, und/oder

(b) Farbstoffe der Formel (1), worin n gleich 3 ist, wobei in beiden Fällen R Wasserstoff oder in m- oder p-Stellung zum Sauerstoff angeordnetes Methyl bedeutet.

Die Mengenverhältnisse, in denen die einzelnen Farbstoffe in den Mischungen vorhanden sind, können in weiten Grenzen schwanken. Besonders gute Ergebnisse erzielt man jedoch mit Mischungen, welche die einzelnen Farbstoffe in ungefähr gleicher Menge enthalten. Demzufolge sind Mischungen aus drei Farbstoffen der Formel (1), die je zu 25 bis 50 Gew.-%, vorzugsweise 30 bis 40 Gew.-%, in der Mischung enthalten sind, und Mischungen aus 4 Farbstoffen, die je zu 15 bis 40 Gew.-%, vorzugsweise 20 bis 30 Gew.-%, in der Mischung enthalten sind, bevorzugt.

Wegen der leichten Zugänglichkeit der Ausgangsverbindungen und aufgrund ihres besonders guten Aufbaus ist die Farbstoffmischung, bestehend aus den drei Farbstoffen der Formeln (2), (3) und (4)

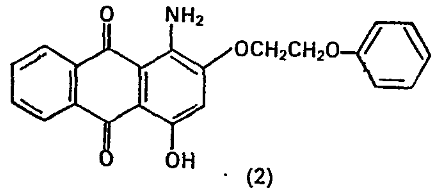

(2)

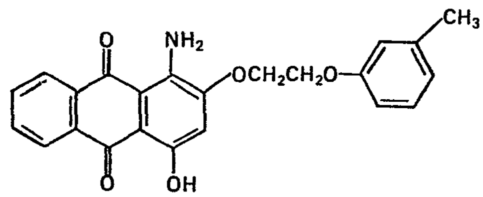

(3)

und

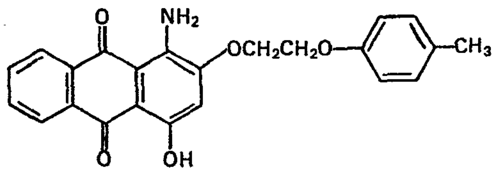

(4)

wobei jede der drei Komponenten im Gemisch zu 25 bis 50 Gew.-%, vorzugsweise 30 bis 40 Gew.-%, enthalten ist, besonders bevorzugt.

Die Farbstoffe der Formel (1) können nach an sich bekannten Verfahren hergestellt werden, beispielsweise indem man 1-Amino-2-phenoxy-4-hydroxyanthrachinon in Gegenwart von Alkali mit einer Verbindung der Formel (6)

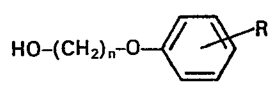

(6)

umsetzt, wobei n und R die bei der Formel (1) angegebene Bedeutung aufweisen.

Eine weitere Möglichkeit zur Herstellung der Farbstoffe der Formel (1) besteht in der Umsetzung von 1-Amino-4-hydroxy-2- chlor- oder -2-brom-anthrachinon mit einer Verbindung der Formel (6) in Gegenwart von Alkali und Phenol in überschüssiger Verbindung der Formel (6) oder in einem Lösungsmittel, wie z.B. N-Methylpyrrolidon, wie sie z.B. in der DE-AS 24 05 782 beschrieben ist.

Vorzugsweise setzt man jedoch 1-Amino-4-hydroxy-2-chlor- oder -2-bromanthrachinon mit einer Verbindung der Formel (6) in Gegenwart von Alkali und Phenol um, wobei man in einem inerten organischen Lösungsmittel in Gegenwart eines Phasentransferkatalysators, insbesondere eines quaternären Ammoniumsalzes, einer Phosphoniumverbindung oder eines Kronenethers, arbeitet. Diese Arbeitsweise ist in der EP-A-71 576 beschrieben.

Die Farbstoffmischungen, enthaltend drei oder vier Farbstoffe der Formel (1), werden z.B. durch einfaches Mischen oder Mahlen der Farbstoffe hergestellt.

Vorzugsweise verfährt man jedoch so, dass man bei den vorstehend beschriebenen Synthesen der Farbstoffe der Formel (1) Mischungen von drei oder vier verschiedenen Verbindungen der Formel (6) einsetzt, so dass man Gemische von Farbstoffen der Formel (1) erhält.

Um zum Färben und Drucken technisch geeignete Farbstoffpräparate zu erhalten, können die erfindungsgemässen Farbstoffmischungen durch übliche mechanische Verfahren, gegebenenfalls in Gegenwart von Wasser und geeigneter Dispergiermittel und anderer Zusätze, in hohe Feinverteilung übergeführt werden.

Die Farbstoffmischungen dienen vor allem zum Färben von synthetischem Textilmaterial, insbesondere solchem aus aromatischen Polyestern nach bekannten Methoden.

Die nachstehenden Beispiele dienen der Erläuterung der Erfindung. Die Temperaturen sind in Grad Celsius angegeben.

Beispiel 1

Man vermischt je 10 g der wie nachstehend beschrieben hergestellten Farbstoffe trocken zu einer homogenen Mischung.

a) 47,3 g 2-Phenoxyethanol, 3,5 g Phenol, 6,9 g Kaliumcarbonat und 10,4 g 1-Amino-2-chlor-4-hydroxyanthrachinon werden zusammen während ca. 15 Stunden bei 160° verrührt. Nach dem Abkühlen auf 100° werden vorsichtig 31,5 g Methanol zugetropft; anschliessend auf 40° gekühlt und abgenutscht.

Es wird zuerst mit Methanol, dann mit Wasser nachgewaschen und getrocknet. Man erhält 12,4 g Farbstoff der Formel (2)

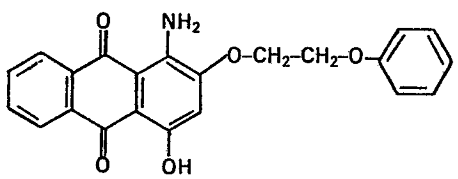

(2)

b) Arbeitet man wie unter a) beschrieben, verwendet jedoch anstelle von 47,3 g 2-Phenoxyethanol 52,1 g 2-(m-Kresoxy)-ethanol, so erhält man 11,6 g Farbstoff der Formel (3)

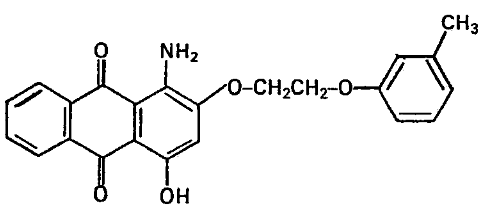

(3)

c) Arbeitet man wie unter a) beschrieben, verwendet jedoch anstelle von 47,3 g 2-Phenoxyethanol 52,1 g 2-(p-Kresoxy)-ethanol, so erhält man 12,6 g Farbstoff der Formel (4)

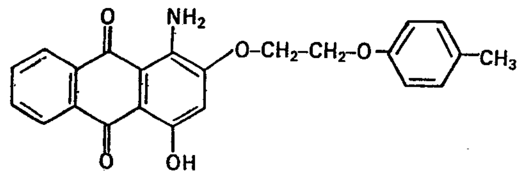

(4)

Das eingesetzte 2-(m-Kresoxy)-ethanol wurde folgendermassen hergestellt:

30,3 g Ethylenchlorhydrin werden bei 90° zu einer Lösung, bestehend aus 40,5 g m-Kresol und 52,4 g 30%iger wässriger Natronlauge, zudosiert und anschliessend 2 Stunden unter Rückfluss gekocht. Nach einer Schichtentrennung bei Raumtemperatur wird die organische Phase im Vakuum destilliert. Man erhält 51,2 g 2-(m-Kresoxy)-ethanol (Sdp: 132–135 °C bei 10 Torr).

Nach analoger Arbeitsweise erhält man bei Verwendung von p-Kresol 2-(p-Kresoxy)-ethanol.

Beispiel 2

82,8 g eines Gemisches von 2-Phenoxyethanol, 2-(p-Kresoxy)-ethanol und 2-(m-Kresoxy)-ethanol im Molverhältnis 1:1:1 werden mit 6,9 g Phenol, 13,8 g Kaliumcarbonat und 10,4 g 1-Amino-2-chlor -4- hydroxyanthrachinon zusammen 6 Stunden bei 160° verrührt. Nach dem Abkühlen auf 100° werden vorsichtig 28,9 g Methanol zugetropft; anschliessend auf Raumtemperatur gekühlt und abgenutscht. Nach Waschen mit Methanol und Wasser und Trocknen erhält man 10,9 g eines Farbstoffgemisches, welches die drei Farbstoffe

1-Amino-4-hydroxy-2-(2'-phenoxyethoxy)-anthrachinon,

1-Amino-4-hydroxy-2(2'-m-kresoxyethoxy)-anthrachinon und

1-Amino-4-hydroxy-2-(2'-p-kresoxyethoxy)-anthrachinon

in etwa gleichen Mengen enthält.

Beispiel 3

30,1 g 1-Amino-2-chlor-4-hydroxyanthrachinon (Titer 91%), 30 ml Nitrobenzol, 5 g Methyltrioctylammoniumchlorid, 10,4 g Phenol, 13,2 g Kaliumcarbonat, ein Gemisch von 15,2 g 2-Phenoxyethanol, 16,7 g 2-(m-Kresoxy)-ethanol und 16,7 g 2-(p-Kresoxy)-ethanol, werden auf 150° erhitzt und 8 Stunden bei 150 bis 153° gerührt. Der Ansatz wird mit 95 ml Methanol versetzt, bei Raumtemperatur filtriert, mit Methanol und Wasser gewaschen und getrocknet. Man erhält 33,35 g (86,8% der Theorie) eines Farbstoffgemisches, das aus drei reinen Komponenten besteht, nämlich

1-Amino-4-hydroxy-2-(2'-phenoxyethoxy)-anthrachinon,

1-Amino-4-hydroxy-2-[2'-(m-kresoxyethoxy)]-anthrachinon und

1-Amino-4-hydroxy-2-[2'-(p-kresoxyethoxy)]-anthrachinon.

Beispiel 4

67,1 g 3-(m-Kresoxy)-propanol, 3,0 g Kaliumhydroxid und 12,6 g 1-Amino-2-phenoxy-4-hydroxyanthrachinon werden zusammen zuerst 18 Stunden bei 150°, dann 14 Stunden bei 170° verrührt. Nach dem Abkühlen auf 80° werden 66,7 g Methanol zugetropft; anschliessend auf Raumtemperatur gekühlt, abgenutscht und mit Methanol nachgewaschen. Der Rückstand wird aus 600 g Chlorbenzol umkristallisiert. Nach dem Trocknen erhält man 5,5 g des Farbstoffes der Formel

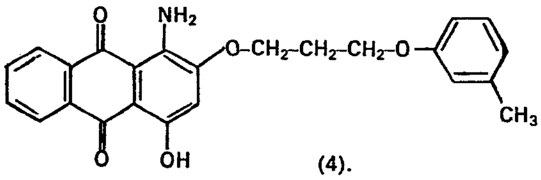
(4).

Das eingesetzte 3-(m-Kresoxy)-propanol wurde folgendermassen hergestellt:

108 g 1,3-Kresol werden in 500 g 10%iger wässriger Natronlauge gelöst. Es werden 95,6 g 3-Chlor-1-propanol zugefügt und anschliessend 2 Stunden unter Rückfluss gekocht. Nach dem Erkalten erhält man durch eine Schichtentrennung 148 g 3-(m-Kresoxy)-propanol.

Beispiel 5

Man bereitet eine Färbeflotte von 250 ml, enthaltend 0,24 g der Farbstoffmischung gemäss Beispiel 1, 0,25 g anionische und nichtionische Tenside, 0,50 g Ammonsulfat und 0,025 ml Ameisensäure 85%ig.

Mit dieser Flotte färbt man 10 g Diolen-Stapelgewebe auf übliche Weise nach dem HT-Ausziehverfahren bei 130°. Anschliessend wird heiss und kalt gespült und reduktiv nachgereinigt.

Man erhält rot gefärbtes Polyestergewebe, welches in einer Farbtiefe von mehr als 2/1 Richttyptiefe gefärbt ist.

Verwendet man dagegen anstelle von 0,24 g der oben eingesetzten Farbstoffmischung, welche die Farbstoffe der Formeln (2), (3) und (4) in gleichen Mengen enthält, 0,24 g der Einzelfarbstoffe der Formeln (2), (3) oder (4), so erhält man nur Färbungen in 1/1 bis 5/4 Richttyptiefe, d.h., bei gleicher Menge an Farbstoff sind die erhaltenen Färbungen nur etwa halb so intensiv.

Die Restmenge an Farbstoff, der im Färbebad verbleibt, beträgt bei den oben beschriebenen Färbungen:

| Farbstoff | Restmenge im Bad |
|---|---|
| (2) | 47% |
| (3) | 41% |
| (4) | 46% |
| Mischung aus (2) + (3) + (4) [1:1:1] | 6% |

**Patentansprüche**

1. Farbstoffmischungen, enthaltend 3 oder 4 Farbstoffe der Formel (1)

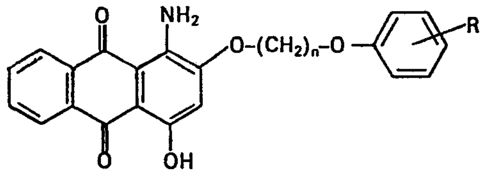
(1)

worin R Wasserstoff, Methyl oder Ethyl und n eine ganze Zahl von 2 bis 4 bedeutet.

2. Farbstoffmischungen gemäss Anspruch 1 enthaltend Farbstoffe der Formel (1), worin n 2 oder 3 bedeutet.

3. Farbstoffmischungen gemäss Anspruch 1, enthaltend

(a) Farbstoffe der Formel (1), worin n gleich 2 ist und R Wasserstoff, Methyl oder in o- oder m-Stellung zum Sauerstoff angeordnetes Ethyl bedeutet, und/oder

(b) Farbstoffe der Formel (1), worin n gleich 3 ist und R Wasserstoff oder Methyl oder Ethyl, welche in m- oder p-Stellung zum Sauerstoff angeordnet sind, bedeutet.

4. Farbstoffmischungen gemäss Anspruch 3, enthaltend

(a) Farbstoffe der Formel (1), worin n gleich 2 ist, und/oder

(b) Farbstoffe der Formel (1), worin n gleich 3 ist, wobei in beiden Fällen R Wasserstoff oder in m- oder p-Stellung zum Sauerstoff angeordnetes Methyl bedeutet.

5. Farbstoffmischungen gemäss Anspruch 1, enthaltend eine Mischung aus 3 Farbstoffen der Formel (1), die je zu 25 bis 50 Gew.-%, vorzugsweise 30 bis 40 Gew.-%, in der Mischung enthalten sind.

6. Farbstoffmischungen gemäss Anspruch 1, enthaltend eine Mischung aus 4 Farbstoffen der formel (1), die je zu 15 bis 40 Gew.-%, vorzugsweise 20 bis 30 Gew.-%, in der Mischung enthalten sind.

7. Farbstoffmischungen gemäss Anspruch 5, bestehend aus den drei Farbstoffen der Formeln (2), (3) und (4)

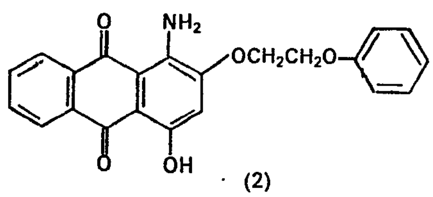
· (2)

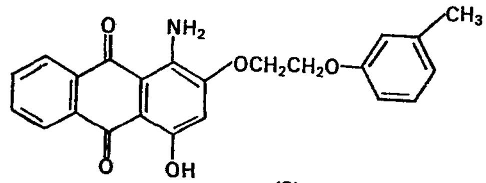
(3)

und

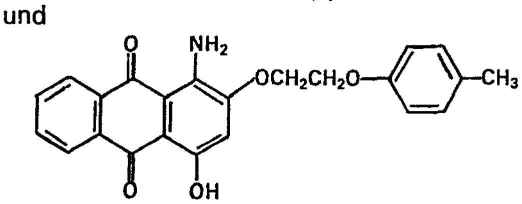
(4)

wobei jede der drei Komponenten im Gemisch zu 25 bis 50 Gew.-%, vorzugsweise 30 bis 40 Gew.-%, enthalten ist.

8. Verfahren zur Herstellung von Farbstoffmischungen, enthaltend 3 oder 4 Farbstoffe der Formel (1)

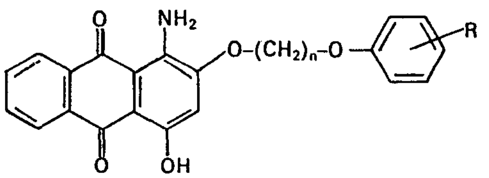

(1),

worin R Wasserstoff, Methyl oder Ethyl und n eine ganze Zahl von 2 bis 4 bedeutet, dadurch gekennzeichnet, dass man 1-Amino-2-phenoxy-4-hydroxyanthrachinon in Gegenwart von Alkali mit einer Mischung von 3 oder 4 Verbindungen der Formel (6)

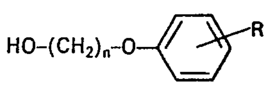

(6)

umsetzt, wobei n und R die oben angegebene Bedeutung aufweisen.

9. Abwandlung des Verfahrens gemäss Anspruch 8, dadurch gekennzeichnet, dass man 1-Amino-4-hydroxy -2- chlor- oder -2-bromanthrachinon mit einer Mischung von 3 oder 4 Verbindungen der Formel (6) in Gegenwart von Alkali und Phenol umsetzt.

10. Abwandlung des Verfahrens gemäss Anspruch 8, dadurch gekennzeichnet, dass man 1-Amino-4-hydroxy- 2- chlor- oder -2-bromanthrachinon mit einer Mischung von 3 oder 4 Verbindungen der Formel (6) in Gegenwart von Alkali und Phenol umsetzt, wobei man in einem inerten organischen Lösungsmittel in Gegenwart eines quartären Ammoniumsalzes, einer Phosphoniumverbindung oder eines Kronenethers als Phasentransferkatalysator arbeitet.

11. Verfahren zum Färben von synthetischem Textilmaterial, dadurch gekennzeichnet, dass man eine Färbeflotte verwendet, welche Farbstoffmischungen gemäss Anspruch 1 enthält.

## Revendications

1. Mélanges de colorants contenant 3 ou 4 colorants répondant à la formule (1)

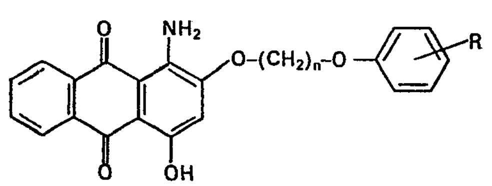

(1)

dans laquelle R désigne l'hydrogène, un radical méthyle ou éthyle et n un nombre entier de 2 à 4.

2. Mélanges de colorants, selon la revendication 1, contenant des colorants répondant à la formule (1), dans laquelle n est 2 ou 3.

3. Mélanges de colorants selon la revendication 1, contenant

(a) des colorants répondant à la formule (1), dans laquelle n est égal à 2 et R est l'hydrogène, un radical méthyle ou un radical éthyle en position orto ou méta par rapport à l'oxygène et/ou

(b) des colorants répondant à la formule (1), dans laquelle n est égal à 3 et R désigne l'hydrogène ou un radical méthyle ou éthyle qui sont disposés en position méta ou para par rapport à l'oxygène.

4. Mélanges de colorant selon la revendication 3, contenant

(a) des colorants répondant à la formule (1), dans laquelle n est égal à 2, et/ou

(b) des colorants répondant à la formule (1), dans laquelle n est égal à 3, R étant dans les deux cas l'hydrogène ou un radical méthyle disposé en position méta ou para par rapport à l'oxygène.

5. Mélanges de colorants selon la revendication 1, contenant un mélange de trois colorants répondant à la formule (1), qui sont contenus chacun dans le mélange à raison de 25 à 50% en poids, de préférence de 30 à 40% en poids.

6. Mélanges de colorants selon la revendication 1, contenant un mélange de quatre colorants répondant à la formule (1), qui sont contenus dans le mélange à raison de 15 à 40% en poids, de préférence de 20 à 30% en poids.

7. Mélanges de colorants selon la revendication 5, constitué des trois colorants répondant aux formules (2), (3) et (4)

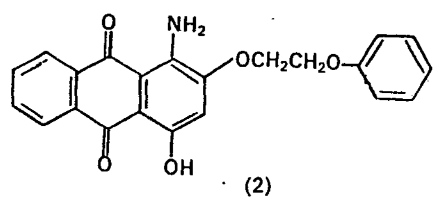

(2)

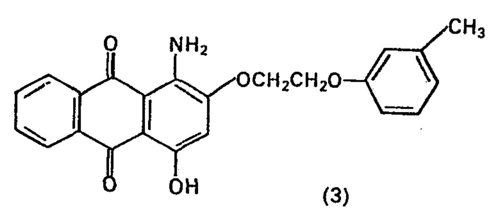

(3)

et

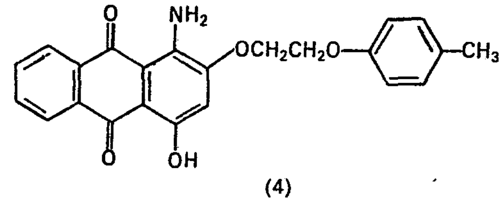

(4)

chacun des trois constituants étant contenu dans le mélange à raison de 25 à 50% en poids, de préférence de 30 à 40% en poids.

8. Procédé de préparation de mélanges de colorants contenant 3 ou 4 colorants répondant à la formule (1)

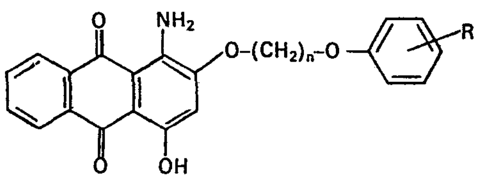

(1),

dans laquelle R désigne l'hydrogène, un radical méthyle ou éthyle et n un nombre entier de 2 à 4, caractérisé en ce qu'on fait réagir la 1-amino-2-phénoxy-4-hydroxyanthraquinone en présence d'alcali avec un mélange de trois ou quatre composés répondant à la formule (6)

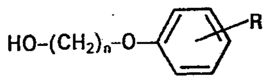

(6)

n et R ayant les significations indiquées ci-dessus.

9. Variante du procédé selon la revendication 8, caractérisée en ce qu'on fait réagir la 1-amino-4-hydroxy -2- chloro- ou -2-bromo-anthraquinone avec un mélange de 3 ou 4 composés répondant à la formule (6) en présence d'alcali et de phénol.

10. Variante du procédé selon la revendication 8, caractérisée en ce qu'on fait réagir la 1-amino-4-hydroxy-2-chloro- ou -2-bromo-anthraquinone avec un mélange de 3 ou 4 composés répondant à la formule (6) en présence d'alcali et de phénol, en travaillant dans un solvant organique inerte en présence d'un sel d'ammonium quaternaire, d'un composé phosphonium ou d'un éther couronne comme catalyseur de transfert de phase.

11. Procédé de teinture de matières textiles synthétiques, caractérisé en ce qu'on utilise un bain de teinture qui contient des mélanges de colorants selon la revendication 1.

## Claims

1. A dye mixture comprising 3 or 4 dyes of the formula (1)

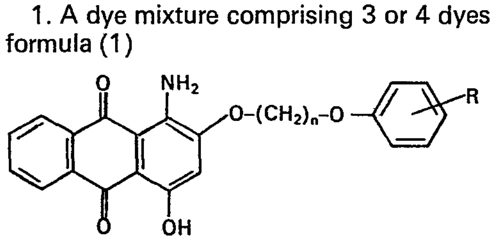

(1)

wherein R is hydrogen, methyl or ethyl, and n is an integer from 2 to 4.

2. A dye mixture according to claim 1 comprising dyes of the formula (1) wherein n is 2 or 3.

3. A dye mixture according to claim 1 comprising:

(a) dyes of the formula (1) wherein n is 2 and R is hydrogen or methyl, or R is ethyl in the o- or m-position to the oxygen atom, and/or

(b) dyes of the formula (1) wherein n is 3 and R is hydrogen, or methyl or ethyl, each in the m- or p-position to the oxygen atom.

4. A dye mixture according to claim 3 comprising

(a) dyes of the formula (1) wherein n is 2, and/or

(b) dyes of the formula (1) wherein n is 3, R in both cases being hydrogen, or methyl in the m- or p-position to the oxygen atom.

5. A dye mixture according to claim 1 comprising a mixture of 3 dyes of the formula (1), each of which is present in the mixture in an amount of 25 to 50% by weight, preferably 30 to 40% by weight.

6. A dye mixture according to claim 1 comprising a mixture of 4 dyes of the formula (1), each of which is present in the mixture in an amount of 15 to 40% by weight, preferably 20 to 30% by weight.

7. A dye mixture according to claim 5 comprising the 3 dyes of the formulae (2), (3) and (4)

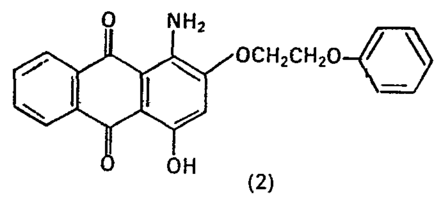

(2)

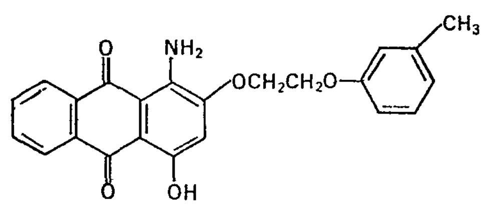

(3)

and

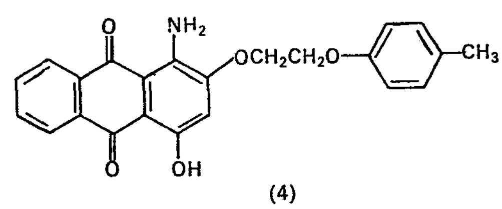

(4)

each of the three components being present in the mixture in an amount of 25 to 50% by weight, preferably 30 to 40% by weight.

8. A process for the preparation of a dye mixture comprising 3 or 4 dyes of the formula (1)

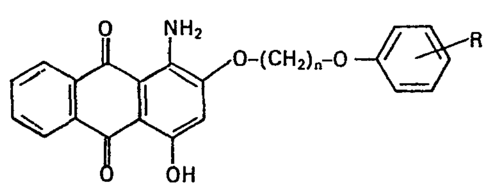

(1)

wherein R is hydrogen, methyl or ethyl and n is an integer from 2 to 4, which process comprises reacting 1-amino-2-phenoxy -4- hydroxyanthraquinone, in the presence of alkali, with a mixture of 3 or 4 compounds of the formula (6)

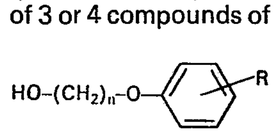

(6)

wherein n and R are as defined above.

9. A modification of the process according to claim 8, which comprises reacting 1-amino-4-hydroxy-2-chloroanthraquinone or 1-amino-4-hydroxy-2-bromoanthraquinone with a mixture of 3 or 4 compounds of the formula (6) in the presence of alkali and phenol.

10. A modification of the process according to claim 8, which comprises reacting 1-amino-4-hydroxy-2-chloroanthraquinone or 1-amino-4-hydroxy-2-bromoanthraquinone with a mixture of 3 or 4 compounds of the formula (6) in the presence of alkali and phenol, the reaction being carried out in an inert organic solvent and in the presence of a quaternary ammonium salt, a phosphonium compound or a crown ether, as phase-transfer catalyst.

11. A process for dyeing synthetic textile material, which comprises the use of a dye liquor which contains dye mixtures according to claim 1.